# EUROPEAN PATENT APPLICATION

(11) **EP 4 746 177 A1**
(43) Date of publication of application: **20.05.2026**
(21) Application number: 24943689.0
(22) Date of filing: 03.09.2024
(51) Int. Cl.: H01M 50/519, H01M 50/284, H01M 50/211, H01M 50/258, H01M 50/186

(54) **BATTERY PACK AND ELECTRIC DEVICE**

(30) Priority: 19.08.2024 CN 202411136362
(71) Applicant: ZHEJIANG LIWINON ENERGY TECHNOLOGY CO., LTD., Jinhua, Zhejiang 321102 (CN)
(72) Inventor: Yuan, Zhen, Jinhua, Zhejiang 321102 (CN); Han, Bing, Jinhua, Zhejiang 321102 (CN); Li, Cong, Jinhua, Zhejiang 321102 (CN); Ji, Rongjin, Jinhua, Zhejiang 321102 (CN); Wu, Shengben, Jinhua, Zhejiang 321102 (CN); Xiang, Haibiao, Jinhua, Zhejiang 321102 (CN)
(74) Representative: Patentwerk B.V.
(86) International application number: PCT/CN2024/116597
(87) International publication number: WO 2026/040129

(57) **Abstract**

The present disclosure provides a battery pack and an electrical device. The battery pack includes: pouch batteries and a printed circuit board (PCB). The battery pack includes: the plurality of pouch batteries, distributed in a width direction of the pouch battery, each of the pouch batteries includes a casing and a battery cell, the casing includes a packaging portion and a side sealing edge portion, the battery cell is located in the packaging portion, each of two opposing sides of the packaging portion in the width direction of the pouch battery is connected to the side sealing edge portion, the side sealing edge portion located between neighboring packaging portions is an inner side sealing edge portion, and one end of the packaging portion in a length direction of the pouch battery has a first surface; and a PCB, located on the first surface of the pouch battery, the inner side sealing edge portion protrudes toward the PCB relative to the first surface, the PCB has two second surfaces opposite to each other in a thickness direction of the PCB, one of the two second surfaces faces the first surface, the PCB has a first avoidance slot, and a part of the inner side sealing edge portion extends into the first avoidance slot. Therefore, a distance between the PCB and a packaging portion is reduced, a length of the battery pack is reduced, thereby increasing an energy density of the battery pack.

## Description

### TECHNICAL FIELD

The present disclosure relates to the technical field of batteries, and in particular, to a battery pack and an electrical device.

### BACKGROUND

To improve battery performance, two batteries are connected in series or parallel to form a battery pack. A specific structure thereof is as follows: a printed circuit board (PCB) is disposed at top sealing edges of the pouch batteries, positive and negative tabs of the two pouch batteries are welded onto the same PCB, and then the pouch batteries are packed. To avoid interference between side sealing edges between the pouch batteries and the PCB, the existing technology typically includes two configuration methods. In one method, the PCB is arranged parallel to the top sealing edge, a thickness of the PCB corresponds to a length of the pouch battery, and a part of the side sealing edge protruding beyond the top sealing edge is bent and attached against the top sealing edge, such that a protruding part of the side sealing edge is clamped between the PCB and the top sealing edge. However, this arrangement increases a distance between the PCB and the top sealing edge. In the other method, the PCB is arranged perpendicular to the top sealing edge, a width of the PCB corresponds to the length of the pouch battery, and the PCB is located at a top part of the side sealing edge. However, this arrangement increases a length of the battery pack.

Therefore, it can be learned that both the methods increase the length of the battery pack, and reduce an energy density of the battery pack.

### SUMMARY

The present disclosure aims to resolve at least one of technical problems existing in the existing technology. In view of the above, the present disclosure provides a battery pack that can achieve a higher energy density.

The present disclosure further provides an electrical device including the battery pack described above.

According to an embodiment of a first aspect of the present disclosure, a battery pack is provided, including: pouch batteries and a PCB.

The battery pack includes: a plurality of pouch batteries, distributed in a width direction of the pouch battery, wherein each of the pouch batteries includes a casing and a battery cell, the casing includes a packaging portion and a side sealing edge portion, the battery cell is located in the packaging portion, each of two opposing sides of the packaging portion in the width direction of the pouch battery is connected to the side sealing edge portion, the side sealing edge portion located between neighboring packaging portions is an inner side sealing edge portion, and one end of the packaging portion in a length direction of the pouch battery has a first surface; and a printed circuit board (PCB), located at one end of the pouch battery in the length direction of the pouch battery, wherein the inner side sealing edge portion protrudes toward the PCB relative to the first surface, the PCB has two second surfaces opposite to each other in a thickness direction of the PCB, one of the two second surfaces faces the first surface, each of the pouch batteries is electrically connected to the PCB, the PCB has a first avoidance slot, and a part of the inner side sealing edge portion extends into the first avoidance slot.

The battery pack according to an embodiment of the present disclosure has at least the following beneficial effects.

In this embodiment, the PCB is arranged facing the first surface of the packaging portion, that is, the thickness direction of the PCB corresponds to the length direction of the pouch battery. Furthermore, because the PCB has the first avoidance slot, the inner side sealing edge portion can extend into the first avoidance slot, thereby preventing interference between the PCB and the inner side sealing edge portion. Therefore, compared with conventional technologies, in this embodiment, a thickness of the PCB corresponds to a length of the pouch battery, avoiding an increase in a length of the battery pack due to a width of the PCB. Furthermore, the PCB has the first avoidance slot, configured to accommodate the inner side sealing edge portion, such that a part of the inner side sealing edge portion does not need to be bent and clamped between the PCB and the packaging portion. In this way, there is no need to provide a gap between the PCB and the packaging portion for accommodating the inner side sealing edge portion. Therefore, a distance between the PCB and the packaging portion is reduced, and the length of the battery pack is further reduced, thereby increasing an energy density of the battery pack in this embodiment.

According to some embodiments of the present disclosure, the inner side sealing edge portion has a third surface facing the PCB in the thickness direction of the pouch battery, the inner side sealing edge portion has a second avoidance slot, the second avoidance slot is formed through the inner side sealing edge portion in the width direction of the pouch battery and extends to the third surface, and a part of the PCB extends into the second avoidance slot.

According to some embodiments of the present disclosure, the second avoidance slot forms a slot opening on the third surface, and the slot opening has two opening edges opposite to each other in the length direction of the pouch battery.

According to some embodiments of the present disclosure, the inner side sealing edge portion has a fourth surface close to the PCB in the length direction of the pouch battery, and the second avoidance slot extends to the fourth surface.

According to some embodiments of the present disclosure, the inner side sealing edge portion includes a first folded portion, and the first folded portion is folded away from the PCB to form the second avoidance slot.

According to some embodiments of the present disclosure, the inner side sealing edge portion has two fifth surfaces opposite to each other in the width direction of the pouch battery, an edge where the fifth surface intersects the third surface is defined as a first edge, an edge where the fifth surface intersects the fourth surface is defined as a second edge, and the first folded portion forms a first fold line on the fifth surface;
one end of the first fold line is located at the first edge, and the other end of the first fold line is located at the second edge; or
one end of the first fold line is located at the first edge, and the other end of the first fold line is arranged spaced apart from the second edge; or
one end of the first fold line is located at the second edge, and the other end of the first fold line is arranged spaced apart from the first edge.

According to some embodiments of the present disclosure, one end of the first fold line is located at the first edge, the other end of the first fold line is located at the second edge, the first avoidance slot has a first inner wall surface facing the inner side sealing edge portion in the thickness direction of the pouch battery, and the first inner wall surface is arranged inclined toward the first folded portion in a direction from the pouch battery to the PCB.

According to some embodiments of the present disclosure, the inner side sealing edge portion has two fifth surfaces opposite to each other in the width direction of the pouch battery, the second avoidance slot has a second inner wall surface facing the PCB in the thickness direction of the pouch battery, an edge where the fifth surface intersects the fourth surface is defined as a second edge, and an edge where the fifth surface intersects the second inner wall surface is defined as a third edge;
the inner side sealing edge portion further includes a second folded portion, the second folded portion is folded away from the PCB to form a third avoidance slot in communication with the second avoidance slot and form a second fold line on the fifth surface, one end of the second fold line is located at the second edge, and the other end of the second fold line is located at the third edge.

According to some embodiments of the present disclosure, one end of the second fold line is located at an end of the second edge away from the PCB, and an angle between the second fold line and the length direction of the pouch battery is defined as α, wherein 35°<α≤70°.

According to some embodiments of the present disclosure, the first avoidance slot has a first inner wall surface facing the inner side sealing edge portion in the thickness direction of the pouch battery, and the first inner wall surface is arranged inclined toward the second folded portion in a direction from the pouch battery to the PCB.

According to some embodiments of the present disclosure, the PCB includes a circuit electrically connected to the pouch battery and located on the second surface of the PCB facing away from the pouch battery.

According to some embodiments of the present disclosure, the casing further includes a top sealing edge portion connected to the first surface and folded toward the first surface.

According to some embodiments of the present disclosure, the inner side sealing edge portion has a fourth surface close to the PCB in the length direction of the pouch battery, one side of the top sealing edge portion close to the inner side sealing edge portion is arranged curved away from the first surface and extends to the fourth surface to form an extension portion, the extension portion has a fourth avoidance slot, and the PCB extends into the fourth avoidance slot.

According to some embodiments of the present disclosure, a dimension of the first avoidance slot in the thickness direction of the pouch battery ranges from 1.5 mm to 3 mm.

According to some embodiments of the present disclosure, the inner side sealing edge portion is cut to form the second avoidance slot, and a dimension of the second avoidance slot in the thickness direction of the pouch battery ranges from 0.3 mm to 2 mm.

According to an embodiment of a second aspect of the present disclosure, an electrical device including the battery pack according to the embodiment of the first aspect is provided.

The electrical device according to an embodiment of the present disclosure has at least the following beneficial effects.

The electrical device comprises the battery pack according to the embodiment of the first aspect. The PCB in the battery pack is arranged facing the first surface of the packaging portion, that is, the thickness direction of the PCB corresponds to the length direction of the pouch battery. Furthermore, because the PCB has the first avoidance slot, the inner side sealing edge portion can extend into the first avoidance slot, thereby preventing interference between the PCB and the inner side sealing edge portion. Therefore, compared with conventional technologies, in this embodiment, the thickness of the PCB corresponds to the length of the pouch battery, avoiding the increase in the width of the battery pack due to the width of the PCB. Furthermore, the PCB has the first avoidance slot, configured to accommodate the inner side sealing edge portion, such that a part of the inner side sealing edge portion does not need to be bent and clamped between the PCB and the packaging portion. In this way, there is no need to provide a gap between the PCB and the packaging portion for accommodating the inner side sealing edge portion. Therefore, the distance between the PCB and the packaging portion is reduced, a length of the battery pack is further reduced, and the energy density of the battery pack is increased, thereby prolonging service life of the electrical device in this embodiment.

Additional aspects and advantages of the present disclosure are given in part in the following description, part of which become apparent from the following description, or are learned from practices of the present disclosure.

### BRIEF DESCRIPTION OF DRAWINGS

The present disclosure is further described below with reference to accompanying drawings and embodiments, in which:
FIG. 1 is a structural schematic diagram of a first battery pack according to an embodiment of a first aspect of the present disclosure;
FIG. 2 is an enlarged view of a part A in FIG. 1;
FIG. 3 is a structural schematic diagram of a pouch battery in FIG. 1;
FIG. 4 is an enlarged schematic view of a part B in FIG. 3;
FIG. 5 is a schematic diagram of FIG. 1 from another viewing angle;
FIG. 6 is an enlarged schematic view of a part C in FIG. 5;
FIG. 7 is a partial schematic view of an inner side sealing edge portion in a second battery pack according to the embodiment of the first aspect of the present disclosure;
FIG. 8 is a structural schematic diagram of a pouch battery in a third battery pack according to the embodiment of the first aspect of the present disclosure;
FIG. 9 is an enlarged schematic view of a part D in FIG. 8;
FIG. 10 is a schematic diagram showing a structure when a first folded portion in FIG. 9 is not folded;
FIG. 11 is a partial schematic view of an inner side sealing edge portion in a fourth battery pack according to the embodiment of the first aspect of the present disclosure;
FIG. 12 is a schematic diagram showing a structure when a first folded portion in FIG. 11 is not folded;
FIG. 13 is a partial schematic view of an inner side sealing edge portion in a fifth battery pack according to the embodiment of the first aspect of the present disclosure;
FIG. 14 is a schematic diagram showing a structure when a first folded portion in FIG. 13 is not folded;
FIG. 15 is a structural schematic diagram of an inner side sealing edge portion and a PCB in FIG. 9;
FIG. 16 is a partial schematic view of an inner side sealing edge portion in a sixth battery pack according to the embodiment of the first aspect of the present disclosure;
FIG. 17 is a schematic diagram showing a structure when a second folded portion in FIG. 16 is not folded;
FIG. 18 is a structural schematic diagram of the inner side sealing edge portion and a PCB in FIG. 16;
FIG. 19 is a structural schematic diagram of a seventh battery pack according to the embodiment of the first aspect of the present disclosure;
FIG. 20 is a structural schematic diagram of a pouch battery in FIG. 19;
FIG. 21 is an enlarged schematic view of a part E in FIG. 20;
FIG. 22 is a side view of a pouch battery and a PCB in FIG. 1;
FIG. 23 is a side view of a pouch battery and a PCB in FIG. 19;
FIG. 24 is a schematic diagram showing a structure obtained after a tip portion is cut;
FIG. 25 is a schematic diagram showing a top sealing edge portion and a side sealing edge portion in an unfolded state in FIG. 24;
FIG. 26 is a structural schematic diagram of a tip portion formed by an inner side sealing edge portion and a top sealing edge portion; and
FIG. 27 is a schematic diagram showing the inner side sealing edge portion and the top sealing edge portion in an unfolded state in FIG. 26.

Reference numerals:
pouch battery 100, casing 101, packaging portion 110, first surface 111, side sealing edge portion 120, inner side sealing edge portion 130, first edge 1301, second edge 1302, third edge 1303, third surface 131, second avoidance slot 132, second inner wall surface 1321, fourth surface 133, first folded portion 134, fifth surface 135, first fold line 1351, second fold line 1352, first endpoint 1353, second endpoint 1354, cutting slit 136, second folded portion 137, third avoidance slot 138, top sealing edge portion 140, extension portion 141, fourth avoidance slot 1411;
PCB 200, first board body 201, second board body 202, second surface 210, first avoidance slot 220, first inner wall surface 221.

### DETAILED DESCRIPTION

Embodiments of the present disclosure will be described in detail hereinafter in conjunction with accompanying drawings in which the same or like reference numerals refer to the same or like elements or elements having the same or like functions throughout. The embodiments described below by reference to the accompanying drawings are illustrative and are intended for illustrating only and are not to be construed as limiting the present disclosure.

In the description of the present disclosure, it should be understood that for the description of orientations, the orientation or positional relationships indicated by the terms such as "upper," "lower," "front," "rear," "left," "right," and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting the present disclosure.

In the description of the present disclosure, the term "several" means one or more, the term "plurality of (or multiple) " means two or more, the term such as "greater than," "less than," "exceed" or variants thereof prior to a number or series of numbers is understood to not include the specific number itself. The term such as "no less than" "no more than" "within" or variants thereof prior to a number or series of numbers is understood to include the specific number itself. If used herein, the terms such as "first," "second," and the like are merely used for distinguishing technical features, and are not intended to indicate or imply relative importance, or implicitly point out the number of the indicated technical features, or implicitly point out the precedence order of the indicated technical features.

In the description of the present disclosure, unless otherwise explicitly defined, the terms such as "configure," "install/mount" and "connect" should be understood in a broad sense, and those having ordinary skills in the art can reasonably determine the specific meanings of the above terms in the present disclosure based on the specific contents of the technical solution.

To improve battery performance, two batteries are connected in series or parallel to form a battery pack. A specific structure thereof is as follows: a printed circuit board (PCB) is disposed at top sealing edges of the pouch batteries, positive and negative tabs of the two pouch batteries are welded onto the same PCB, and then the pouch batteries are packed. To avoid interference between side sealing edges between the pouch batteries and the PCB, the existing technology typically includes two configuration methods. In one method, the PCB is arranged parallel to the top sealing edge, a thickness of the PCB corresponds to a length of the pouch battery, and a part of the side sealing edge protruding beyond the top sealing edge is bent and attached against the top sealing edge, such that the protruding part of the side sealing edge is clamped between the PCB and the top sealing edge. However, this arrangement increases a distance between the PCB and the top sealing edge. In the other method, the PCB is arranged perpendicular to the top sealing edge, a width of the PCB corresponds to the length of the pouch battery, and the PCB is located at a top part of the side sealing edge. However, this arrangement increases a length of the battery pack.

Therefore, it can be learned that both the methods increase the length of the battery pack, and reduce an energy density of the battery pack.

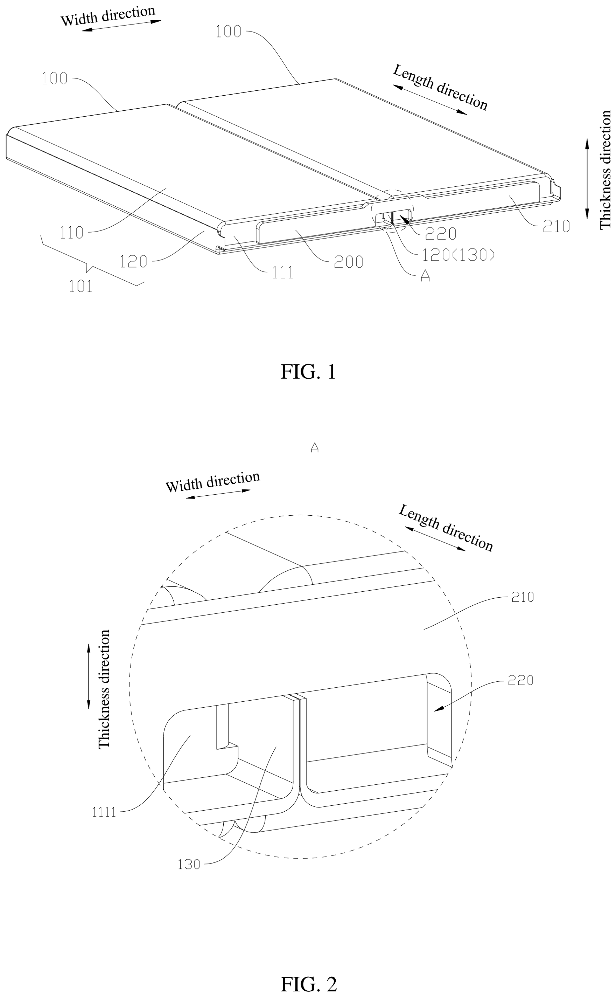

In view of the above, the present disclosure provides a battery pack having a high energy density. Referring to FIG. 1 and FIG. 2, FIG. 1 is a structural schematic diagram of a first battery pack according to an embodiment of a first aspect of the present disclosure, and FIG. 2 is an enlarged view of a part A in FIG. 1. The battery pack in this embodiment includes: pouch batteries 100 and a PCB 200.

The battery pack includes a plurality of pouch batteries 100. Each of the pouch batteries 100 has a defined length, width, and thickness. The plurality of pouch batteries 100 are arranged in a width direction and electrically connected in series or parallel via the PCB 200. Specifically, each of the pouch batteries 100 includes a casing 101 and a battery cell. The casing 101 is made of an aluminum-plastic film, but is not limited thereto. The casing 101 includes a packaging portion 110 and a side sealing edge portion 120. The packaging portion 110 has an accommodation cavity, configured to accommodate an electrolyte and the battery cell. Each of two opposing sides of the packaging portion 110 in the width direction of the pouch battery 100 is connected to the side sealing edge portion 120. The side sealing edge portion 120 located between neighboring packaging portions 110 is an inner side sealing edge portion 130. For example, each inner side sealing edge portion 130 extends along a thickness direction of the pouch battery 100, but is not limited thereto. Alternatively, each inner side sealing edge portion 130 may form an angle with the thickness direction of the pouch battery 100, provided that the inner side sealing edge portion 130 is folded toward the packaging portion 110 and located between the neighboring packaging portions 110. One end of the packaging portion 110 in a length direction of the pouch battery 100 has a first surface 111. The battery cell includes a battery cell body and tabs. The battery cell body includes an anode sheet, a cathode sheet, and a separator. The anode sheet, separator, and cathode sheet are stacked and wound to form the battery cell body. The battery cell body is located within the accommodation cavity. The tabs are connected to the battery cell body. A positive tab is connected to the cathode sheet, and a negative tab is connected to the anode sheet. Each tab protrudes from the first surface 111 (that is, a side surface on which a top sealing edge portion 140 is provided) of the packaging portion 110 along the length direction of the pouch battery 100. The PCB 200 is located on the first surface 111 of the packaging portion 110. The PCB 200 has two second surfaces 210 opposite to each other in a thickness direction of the PCB 200. One of the second surfaces 210 faces the first surface 111. To be specific, the thickness direction of the PCB 200 corresponds to the length direction of the pouch battery 100. The tabs of each pouch battery 100 are electrically connected to the PCB 200, thereby achieving a series or parallel connection between the pouch batteries 100. For example, between neighboring pouch batteries 100, a positive tab is electrically connected to a positive tab, and a negative tab is electrically connected to a negative tab, such that battery cells are connected in parallel. In two neighboring pouch batteries 100, when a positive tab of one pouch battery 100 is connected to a negative tab of the other pouch battery 100, the pouch batteries 100 are connected in series.

Specifically, in this embodiment, the thickness direction of the PCB 200 corresponds to the length direction of the pouch battery 100. It can be learned that a thickness of the PCB 200 is significantly smaller than a width of the PCB 200, such that corresponding the thickness of the PCB 200 to a length of the pouch battery 100, compared to corresponding the width of the PCB 200 to the length of the pouch battery 100, enables the battery pack to have a smaller length (a dimension in the length direction of the pouch battery 100). Furthermore, the PCB 200 is provided with a first avoidance slot 220. The inner side sealing edge portion 130 can extend into the first avoidance slot 220 to avoid interference between the PCB 200 and the inner side sealing edge portion 130, without requiring a part of the inner side sealing edge portion 130 to be bent and clamped between the PCB 200 and the packaging portion 110. Therefore, a distance between the PCB 200 and the packaging portion 110 is reduced, and a length of the battery pack is further reduced, thereby increasing an energy density of the battery pack in this embodiment.

It should be noted that the battery pack in FIG. 1 having only two pouch batteries 100 should not be construed as the only limitation to this embodiment. The battery pack may alternatively include any quantity of pouch batteries 100, such as three, four, or five. Furthermore, electrical connections between neighboring pouch batteries 100 in the battery pack are not limited to either solely parallel or solely series connections, and both parallel and series connections may coexist. For example, a battery pack may have three pouch batteries 100: A, B, and C, wherein pouch batteries 100: A and B are connected in series, and pouch batteries 100: B and C are connected in parallel.

Furthermore, the foregoing arrangement in which the second surface 210 of the PCB 200 faces the first surface 111 of the packaging portion 110 should not be construed as requiring the first surface 111 and the second surface 210 to be arranged parallel. The second surface 210 may not only be arranged parallel to the first surface 111, but may also form a small angle with the first surface 111. For example, the angle between the first surface 111 and the second surface 210 may range from 0 ° to 10 °, provided that a space occupied by the PCB 200 in the length direction of the pouch battery 100 is less than a space that is to be occupied if the width of the PCB 200 directly corresponds to the length of the pouch battery 100.

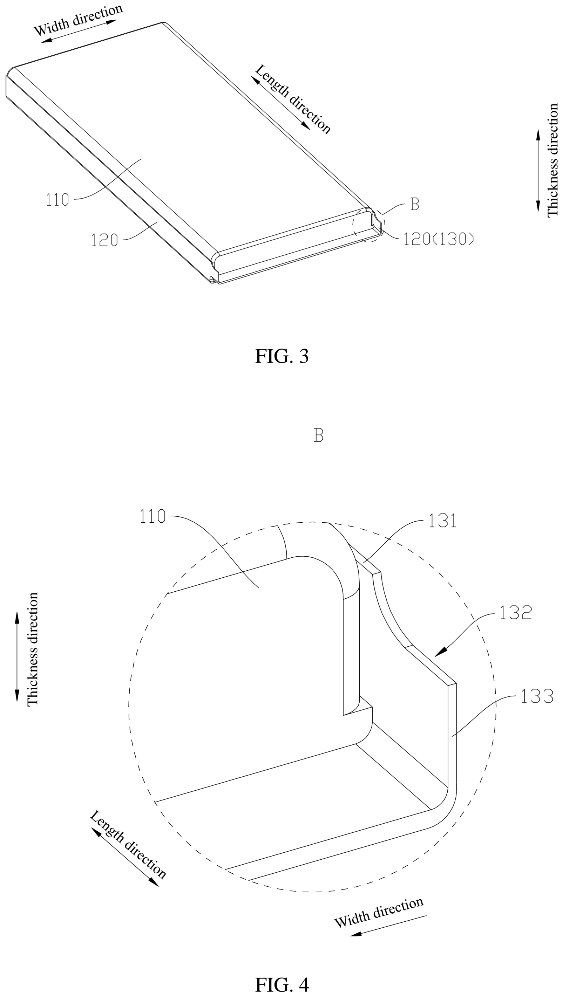

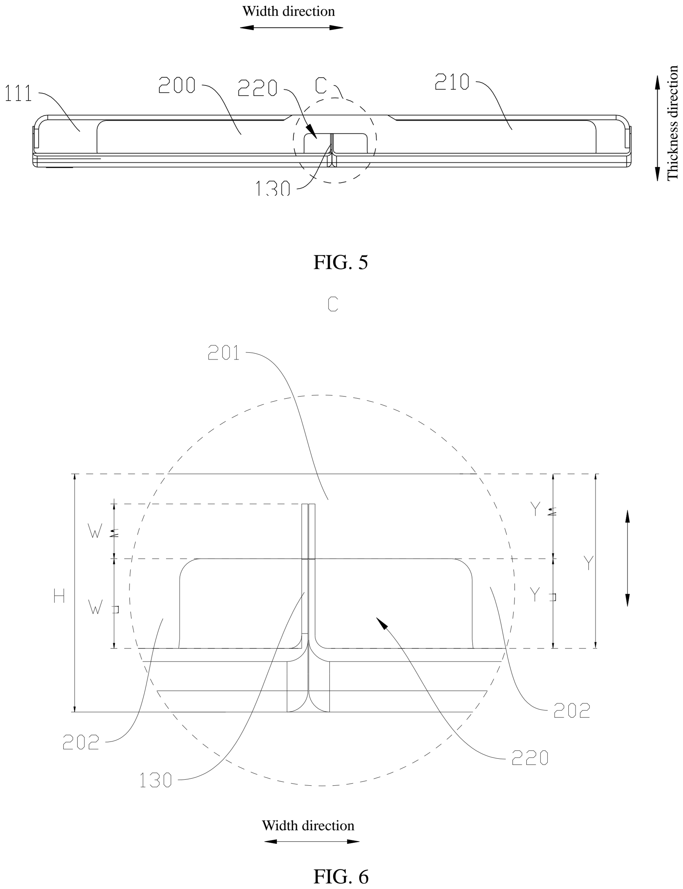

Referring to FIG. 1 to FIG. 6, FIG. 3 is a structural schematic diagram of the pouch battery in FIG. 1, FIG. 4 is an enlarged schematic view of a part B in FIG. 3, FIG. 5 is a schematic diagram of FIG. 1 from another viewing angle, and FIG. 6 is an enlarged schematic view of a part C in FIG. 5. In some embodiments, the inner side sealing edge portion 130 has a third surface 131 close to the PCB 200 in the thickness direction of the pouch battery 100. The inner side sealing edge portion 130 has a second avoidance slot 132 (as shown in FIG. 4). The second avoidance slot 132 may be of any shape, such as a rectangular slot, a circular slot, or a triangular slot. The second avoidance slot 132 is formed through the inner side sealing edge portion 130 in the width direction of the pouch battery 100 and extends to the third surface 131, and a part of the PCB 200 extends into the second avoidance slot 132. Therefore, in the thickness direction of the pouch battery 100, a dimension of the first avoidance slot 220 can be reduced, thereby avoiding a case in which a current-carrying capacity of the PCB 200 is impaired because the PCB 200 is excessively narrow at a position where the second avoidance slot 132 is formed. Specifically, the first avoidance slot 220 is configured as a rectangular slot, but is not limited thereto. Alternatively, the first avoidance slot 220 may be an arc-shaped slot, a V-shaped slot, or the like. For example, the PCB 200 includes a first board body 201 and second board bodies 202. In the width direction of the pouch battery 100, each of two sides of the first board body 201 is connected to a second board body 202. Moreover, the second board bodies 202 protrude beyond the first board body 201 from a same side of the first board body 201 in the thickness direction of the pouch battery 100, to form the rectangular first avoidance slot 220. It can be understood that, to increase the energy density of the battery pack, the PCB 200 does not protrude from a side surface of the pouch battery 100 in the thickness direction of the pouch battery 100. Therefore, a dimension of the PCB 200 is less than or equal to a thickness of the pouch battery 100.

Specifically, FIG. 6 is used as an example. The thickness of the pouch battery 100 is H. In the thickness direction of the pouch battery 100, the dimension of the PCB 200 is Y, the dimension of the first avoidance slot 220 is Y₁, a dimension of the first board body 201 is Y₂, a dimension of the inner side sealing edge portion 130 is W, a dimension of the inner side sealing edge portion 130 at the second avoidance slot 132 is W₁, and a dimension of the second avoidance slot 132 is W₂. Y₁+Y₂=Y, W₁+W₂=W, and W₁+Y₂≤H, thereby ensuring that the PCB 200 does not protrude beyond the pouch battery 100. It can be learned from the foregoing description that, within a range of W₁+Y₂≤H, a smaller W₁ allows for a larger Y₂, the larger Y₂ means a greater width of the first board body 201, and the greater width of the first board body 201 indicates a stronger current-carrying capacity of the first board body 201, that is, a stronger current-carrying capacity of the PCB 200, and a higher strength of the PCB 200. To provide a clearer explanation, in this embodiment, an example of W₁+Y₂=H is used. When the inner side sealing edge portion 130 is not provided with the second avoidance slot 132, that is, W₂=0 and W₁=W, Y₂=H-W, denoted as Y₂₁. When the inner side sealing edge portion 130 is provided with the second avoidance slot 132, that is, W₂<W, Y₂=H-W₂, denoted as Y₂₂. Because Y₂₂>Y₂₁, to be specific, when the inner side sealing edge portion 130 is provided with the second avoidance slot 132, the first board body 201 has a larger width, thereby increasing the current-carrying capacity of the PCB 200, reducing heat generated during operation of the PCB 200, and enhancing the strength of the PCB 200.

Based on the foregoing embodiment, the second avoidance slot 132 is formed by cutting the inner side sealing edge portion 130. In the thickness direction of the pouch battery 100, the dimension of the second avoidance slot 132 ranges from 0.3 mm to 2 mm. Specifically, it can be learned from the foregoing embodiment that, within a specific range, a larger dimension of the second avoidance slot 132 in the width direction of the pouch battery 100 correspondingly indicates a larger dimension of the PCB 200 at a position where the first avoidance slot 220 is provided, that is, a stronger strength and current-carrying capacity of the PCB 200. However, a larger second avoidance slot 132 also means that a larger part of the inner side sealing edge 130 needs to be cut away. The larger cut part indicates a smaller effective sealing width of the inner side sealing edge portion 130. Therefore, in this embodiment, the dimension of the second avoidance slot 132 is set within an appropriate range, which ensures that the PCB 200 has a sufficient strength and current-carrying capacity, while also guaranteeing that the inner side sealing edge portion 130 maintains an adequate effective seal.

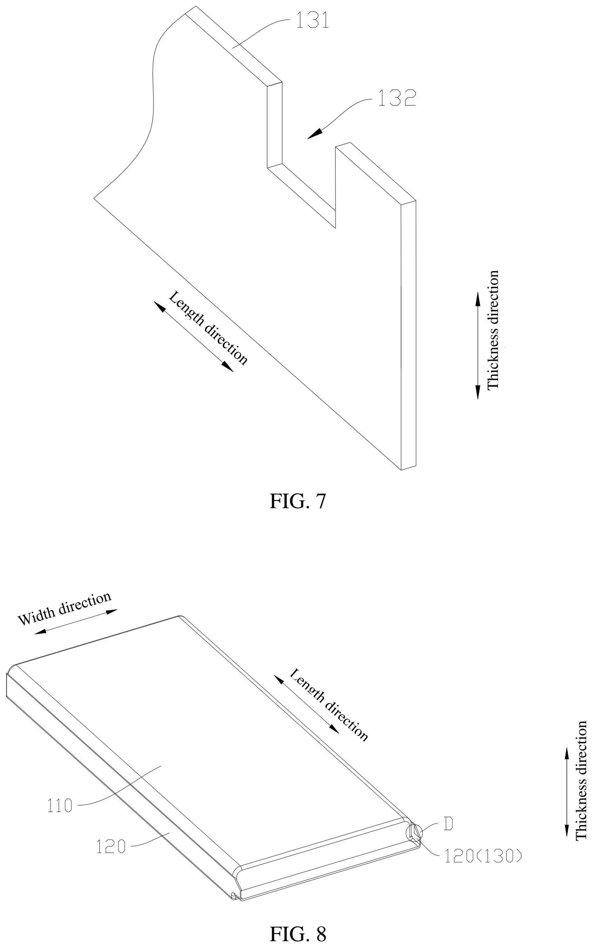

Referring to FIG. 7, FIG. 7 is a partial schematic view of an inner side sealing edge portion in a second battery pack according to the embodiment of the first aspect of the present disclosure. In some embodiments, the second avoidance slot 132 forms a slot opening on the third surface 131, and the slot opening has two opening edges opposite to each other in the length direction of the pouch battery 100. Therefore, when the second avoidance slot 132 is formed by cutting, an entire corner of the inner side sealing edge portion 130 does not need to be removed. Instead, only a slit capable of accommodating the PCB 200 needs to be cut. This improves sealing effectiveness of the inner side sealing edge portion 130, thereby enhancing sealing integrity of the casing 101. Furthermore, in some embodiments, in the length direction of the pouch battery 100, a distance between the two opening edges is a, and the dimension of the PCB 200 is b, where 0≤a-b≤0.5 mm. That is, a gap between the two opening edges is equal to or slightly larger than the thickness of the PCB 200, allowing the PCB 200 to be precisely snap-fitted into the second avoidance slot 132, thereby ensuring effective sealing of the inner side sealing edge portion 130.

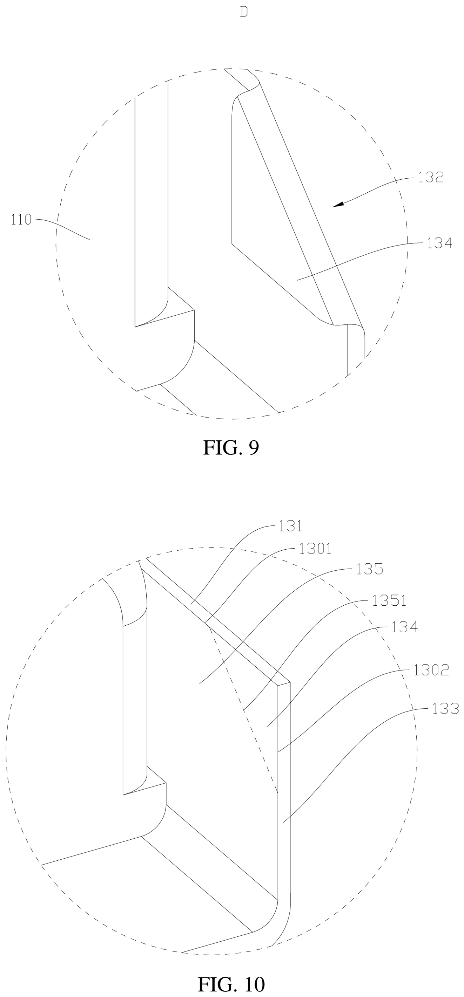

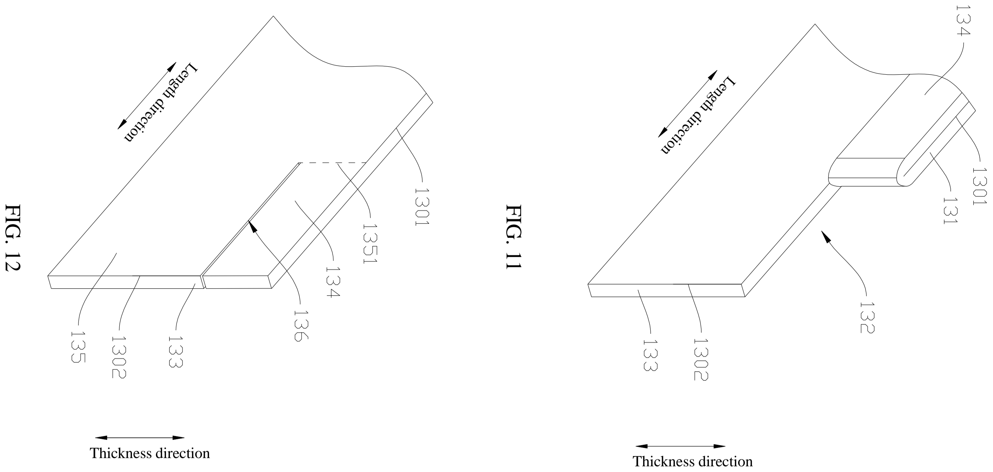

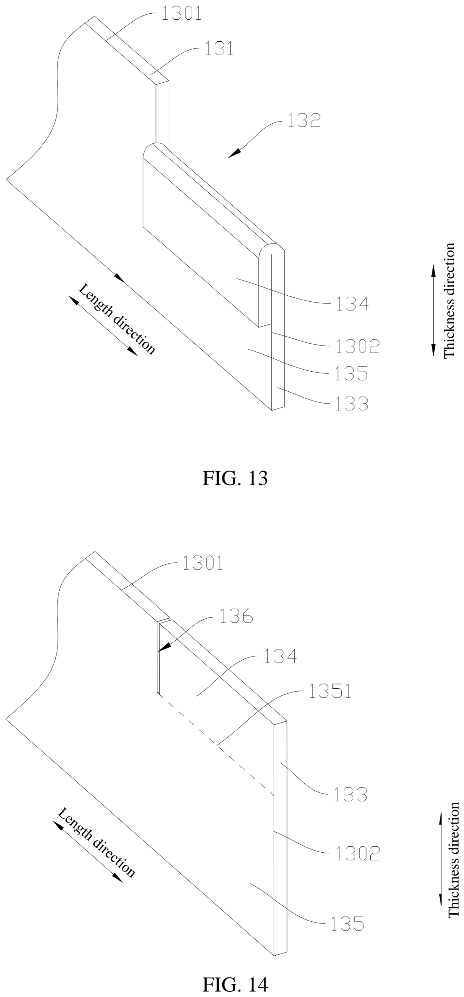

Referring to FIG. 8 to FIG. 14, FIG. 8 is a structural schematic diagram of a pouch battery in a third battery pack according to the embodiment of the first aspect of the present disclosure, FIG. 9 is an enlarged schematic view of a part D in FIG. 8, FIG. 10 is a schematic diagram showing a structure when a first folded portion in FIG. 9 is not folded, FIG. 11 is a partial schematic view of an inner side sealing edge portion in a fourth battery pack according to the embodiment of the first aspect of the present disclosure, FIG. 12 is a schematic diagram showing a structure when a first folded portion in FIG. 11 is not folded, FIG. 13 is a partial schematic view of an inner side sealing edge portion in a fifth battery pack according to the embodiment of the first aspect of the present disclosure, and FIG. 14 is a schematic diagram showing a structure when a first folded portion in FIG. 13 is not folded. In some embodiments, the inner side sealing edge portion 130 has a fourth surface 133 close to the PCB 200 in the length direction of the pouch battery 100, and the second avoidance slot 132 extends to the fourth surface 133 of the inner side sealing edge portion 130. That is, during the manufacturing process, a corner of the inner side sealing edge portion 130 corresponding to the PCB 200 is either directly removed or folded to form the second avoidance slot 132. Regardless of whether the cutting method or the folding method is employed, the associated processing is simpler, thereby improving processing efficiency. Specifically, cutting is used as an example. In this embodiment, the first avoidance slot 220 extends to an end of the inner side sealing edge portion 130 away from the first surface 111. Therefore, it is only necessary to form two edges by making cuts on the inner side sealing edge portion 130, making the cutting process simpler and more efficient.

In some embodiments, the inner side sealing edge portion 130 includes a first folded portion 134, and the first folded portion 134 is folded away from the PCB 200 to form the second avoidance slot 132, without requiring a part of the inner side sealing edge portion 130 to be cut off. This enhances the sealing effectiveness of the inner side sealing edge portion 130. Specifically, the inner side sealing edge portion 130 has two fifth surfaces 135 opposite to each other in the width direction of the pouch battery 100, an edge where the fifth surface 135 intersects the third surface 131 is defined as a first edge 1301, an edge where the fifth surface 135 intersects the fourth surface 133 is defined as a second edge 1302, and the first folded portion is folded away from the PCB to form a first fold line 1351 on the fifth surface. For example, in some embodiments, one end of the first fold line 1351 is located at the first edge 1301, and the other end of the first fold line 1351 is located at the second edge 1302. That is, the first folded portion 134 is located at a corner of the inner side sealing edge portion 130 near the PCB 200. In other words, the second avoidance slot 132 is formed by folding the corner of the inner side sealing edge portion 130 (as shown in FIG. 9 and FIG. 10). This method not only simplifies the manufacturing process but also eliminates the need to cut the inner side sealing edge portion 130, such that a stronger effective seal of the inner side sealing edge portion 130 is achieved, thereby enhancing sealing integrity of the pouch battery 100.

In addition, in some embodiments, one end of the first fold line 1351 is located at the first edge 1301, and the other end of the first fold line 1351 is arranged spaced apart from the second edge. That is, another endpoint of the first fold line 1351 is not on the second edge 1302 (as shown in FIG. 11 and FIG. 12). An example shown in FIG. 12 is used. The first folded portion 134 is a rectangular region (not limited to a rectangle, provided that an endpoint of the first fold line 1351 is spaced apart from the second edge 1302) of the inner side sealing edge portion 130 near the PCB 200. After folding, a larger second avoidance slot 132 can be formed. Specifically, because the other endpoint of the first fold line 1351 is not on the second edge 1302, the endpoint lies within an internal region of the fifth surface 135. Therefore, during manufacturing, a folding slit 136 is first formed in the inner side sealing edge portion 130. The first folded portion 134 having a rectangular structure is used as an example. During manufacturing, starting from the second edge 1302, the folding slit 136 is formed in the length direction of the pouch battery 100. Finally, the first folded portion 134 is folded to form the second avoidance slot 132. This configuration provides the second avoidance slot 132 with a larger avoidance space, and eliminates the need to cut off the first folded portion 134, thereby enhancing the sealing effectiveness of the inner side sealing edge portion 130. Similarly, in some embodiments, one end of the first fold line 1351 is located at the second edge 1302, and the other end of the first fold line 1351 is arranged spaced apart from the first edge 1301 (as shown in FIG. 13 and FIG. 14). Details are not described herein again.

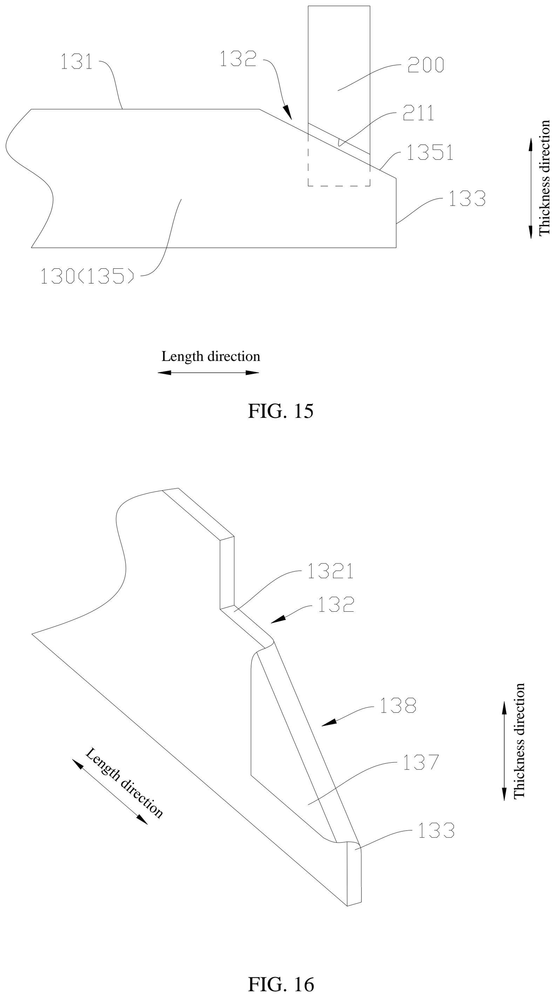

Referring to FIG. 15, FIG. 15 is a structural schematic diagram of an inner side sealing edge portion and a PCB in FIG. 9. In the foregoing embodiment, when one end of the first fold line 1351 is located at the first edge 1301, and the other end is located at the second edge 1302, the first avoidance slot 220 has a first inner wall surface 221 facing the inner side sealing edge portion 130 in the thickness direction of the pouch battery 100, and the first inner wall surface 221 is arranged inclined toward the first folded portion 134 in a direction from the pouch battery to the PCB. The first avoidance slot 220 has the first inner wall surface 221 facing the inner side sealing edge portion 130 in the thickness direction of the pouch battery 100, and the first inner wall surface 221 is arranged inclined toward the first folded portion 134 in the direction of the pouch battery to the PCB. That is, the first inner wall surface 221 is configured as an inclined surface whose degree of inclination corresponds to that of the second fold line 1352. Therefore, a cross-section of the PCB 200 in the thickness direction of the PCB 200 gradually increases, thereby enhancing the strength of the PCB 200. Furthermore, it can be understood that an area of the second surface 210 of the PCB 200 facing away from the pouch battery 100 is greater than an area of the second surface 210 of the PCB 200 facing toward the pouch battery 100. Based on this, the PCB 200 includes a circuit. The circuit is arranged on the second surface 210 of the PCB 200 facing away from the pouch battery 100. This configuration increases an area available for the circuit, such that the current-carrying capacity of the PCB 200 is enhanced, thereby reducing a temperature rise of the PCB 200 during operation.

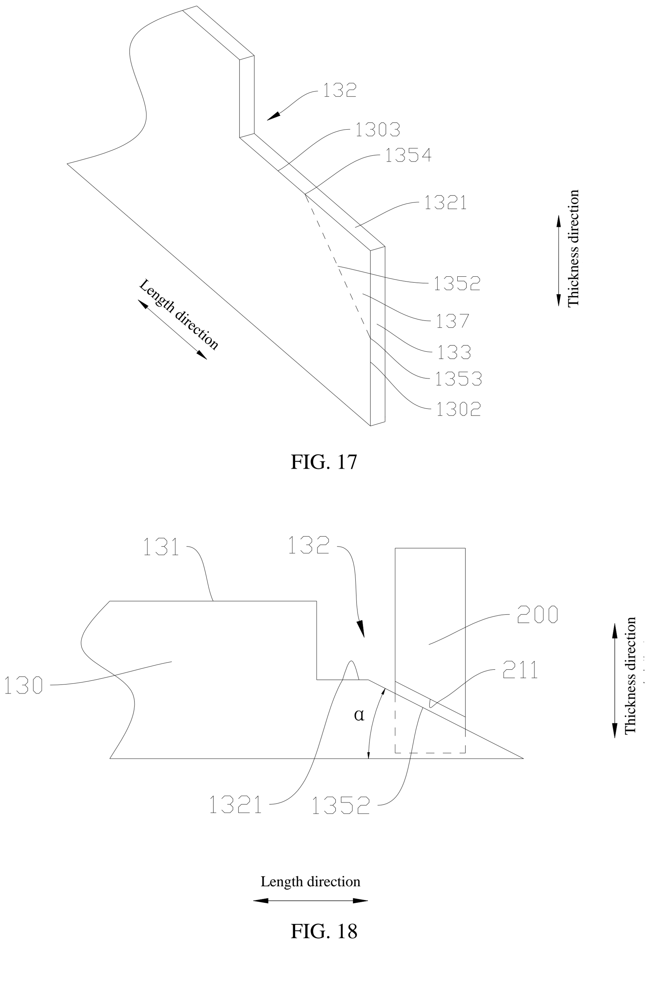

Referring to FIG. 16 and FIG. 17, FIG. 16 is a partial schematic view of an inner side sealing edge portion in a sixth battery pack according to the embodiment of the first aspect of the present disclosure, and FIG. 17 is a schematic diagram showing a structure when a second folded portion in FIG. 16 is not folded. In some embodiments, the inner side sealing edge portion 130 has two fifth surfaces 135 opposite to each other in the width direction of the pouch battery 100, the second avoidance slot has a second inner wall surface 1321 facing the PCB 200 in the thickness direction of the pouch battery 100, and an edge where the fifth surface 135 intersects the second inner wall surface 1321 is defined as a third edge 1303. The inner side sealing edge portion further includes a second folded portion, the second folded portion is folded away from the PCB to form a third avoidance slot in communication with the second avoidance slot and form a second fold line on the fifth surface, and a line segment with one end of the second fold line located at the second edge 1302 and the other end of the second fold line located at the third edge 1303 constitutes the second fold line 1352. That is, on the basis of the inner side sealing edge portion 130 already having the second avoidance slot 132, the second folded portion 137 is further folded (as shown in FIG. 16) to increase an avoidance space of the inner side sealing edge. Therefore, in this solution, on the basis that the second avoidance slot 132 is already formed in the inner side sealing edge portion 130, the avoidance space of the inner side sealing edge portion 130 can be increased without the need for further cutting on the inner side sealing edge portion 130. This ensures the effective sealing of the inner side sealing edge portion 130 while allowing for further enlargement of the avoidance space of the inner side sealing edge portion 130. Therefore, the dimension of the first avoidance slot 220 can be further reduced, and the width of the PCB 200 at the position where the first avoidance slot 220 is provided is further increased, thereby enhancing the current-carrying capacity of the PCB 200.

Specifically, a part of the inner side sealing edge portion 130 located on a side of the second fold line 1352 close to the PCB 200 is defined as the second folded portion 137, and a part of the inner side sealing edge portion 130 located on the other side of the second fold line 1352 is defined as a third portion 1305. The second folded portion 137 is folded along the second fold line 1352, forming an angle β between the second folded portion 137 and the third portion 1305, where 0°≤β≤90°. When β=0°, the second folded portion 137 and the third portion 1305 are in contact with each other. When β=90°, the second folded portion 137 extends in the width direction of the pouch battery 100, which increases a space occupied by the inner side sealing edge portion 130 in the width direction of the pouch battery 100, resulting in an increase in the dimension of the first avoidance slot 220 in the width direction of the pouch battery 100. Based on this, β=0° is preferable. In this case, a space occupied by the inner side sealing edge portion 130 in the thickness direction of the pouch battery 100 is only twice a thickness of the inner side sealing edge portion 130, thereby reducing the dimension of the first avoidance slot 220 and further increasing the strength of the PCB 200.

Furthermore, second folded portions 137 of two neighboring pouch batteries 100 are folded in directions away from each other. This causes the mutually facing fifth surfaces 135 of the inner side sealing edge 130 of the neighboring pouch batteries 100 to contact each other directly, preventing the folded second folded portions 137 from forming a protrusion on the mutually facing fifth surfaces 135 of the neighboring pouch batteries 100. Therefore, formation of a gap between pouch batteries 100 in the battery pack is avoided, which further reduces an overall width of the battery pack.

Referring to FIG. 18, FIG. 18 is a structural schematic diagram of the inner side sealing edge portion and a PCB in FIG. 16. Based on the foregoing embodiment, one end of the second fold line 1352 is located at an end of the second edge 1302 away from the PCB 200, and an angle between the second fold line 1352 and the length direction of the pouch battery 100 is defined as α, where 35°<α≤70°.Specifically, for convenience of description, an endpoint of the second fold line 1352 located on the second edge 1302 is referred to as a first endpoint 1353, and an endpoint located on the third edge 1303 is referred to as a second endpoint 1354. On the premise that a position of the first endpoint 1353 is fixed, a smaller α indicates that the second endpoint 1354 is farther away from the fourth surface 133, that is, the avoidance space formed by the inner side sealing edge portion 130 is larger. However, when the second endpoint 1354 is excessively far from the fourth surface 133, meaning the dimension of the second avoidance slot 132 in the length direction of the pouch battery 100 needs to be larger, a region of the inner side sealing edge portion 130 that needs to be cut also becomes larger. An excessively large cut region in the inner side sealing edge portion 130 leads to a reduction in the effective sealing of the inner side sealing edge portion 130. Based on this, in this embodiment, α is set within an appropriate range. That is, on the premise of ensuring the effective sealing of the inner side sealing edge portion 130, a relatively large avoidance space of the inner side sealing edge portion 130 is achieved, thereby enhancing the current-carrying capacity of the PCB 200 and reducing the temperature rise of the PCB 200.

Referring to FIG. 18, it can be learned from the foregoing embodiment that the second fold line 1352 is arranged inclined relative to the length direction of the pouch battery 100. Because the thickness direction of the PCB 200 corresponds to the length direction of the pouch battery 100, a surface formed by folding the second folded portion 137 therefore faces the PCB 200 at an incline. Based on this, in some embodiments, the first avoidance slot 220 has the first inner wall surface 221 facing the inner side sealing edge portion 130, and the first inner wall surface 221 is arranged inclined toward the second folded portion 137 in the direction of the pouch battery 100 to the PCB 200. That is, the first inner wall surface 221 is configured as the inclined surface whose degree of inclination corresponds to that of the second fold line 1352. Therefore, the cross-section of the PCB 200 in the thickness direction of the PCB 200 gradually increases, thereby enhancing the strength of the PCB 200. Furthermore, it can be understood that the area of the second surface 210 of the PCB 200 facing away from the pouch battery 100 is greater than the area of the second surface 210 of the PCB 200 facing toward the pouch battery 100. Based on this, in some embodiments, the PCB 200 includes the circuit. The circuit is arranged on the second surface 210 of the PCB 200 facing away from the pouch battery 100. This configuration increases the area available for the circuit, such that the current-carrying capacity of the PCB 200 is enhanced, thereby reducing the temperature rise of the PCB 200 during operation.

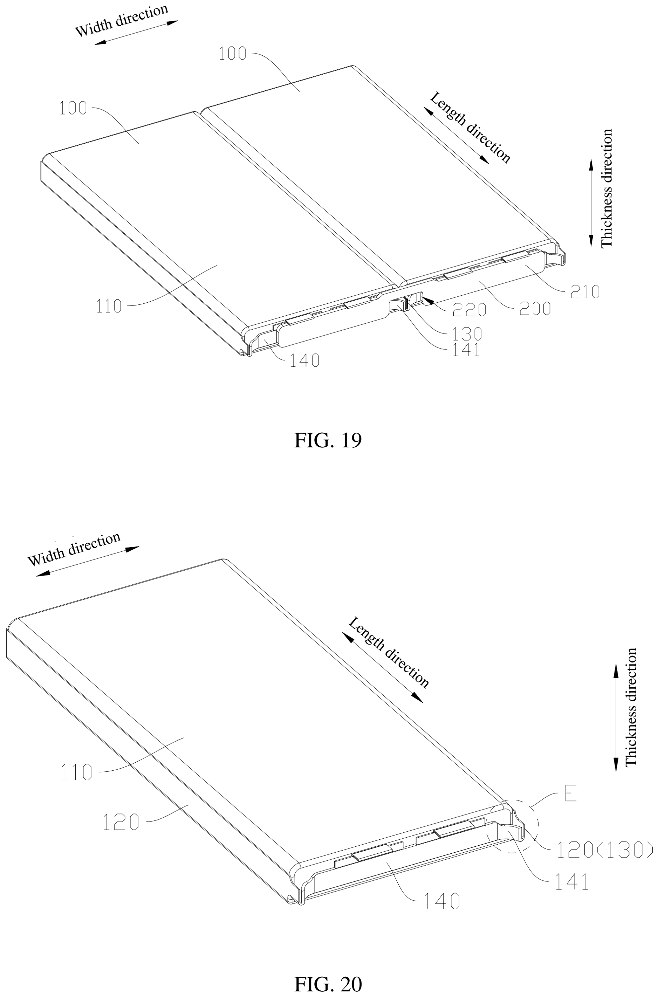

Referring to FIG. 19 and FIG. 17, FIG. 19 is a structural schematic diagram of a seventh battery pack according to the embodiment of the first aspect of the present disclosure, and FIG. 20 is a structural schematic diagram of a pouch battery in FIG. 19. In some embodiments, the casing 101 further includes a top sealing edge portion 140. The top sealing edge portion 140 is connected to the first surface 111 and folded toward the first surface 111. Therefore, a space occupied by the top sealing edge portion 140 in the length direction of the pouch battery is reduced, thereby increasing the energy density of the battery pack in this embodiment.

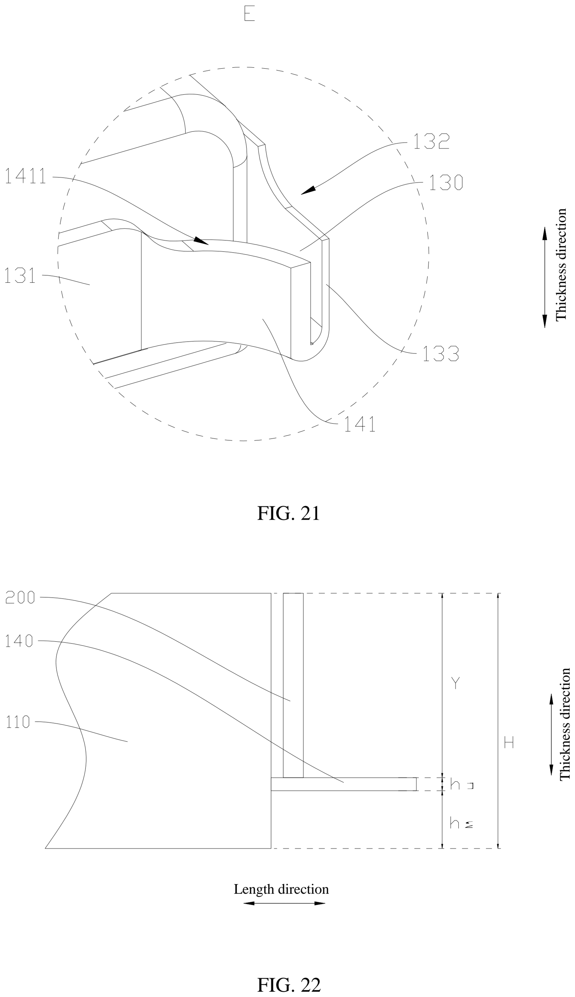

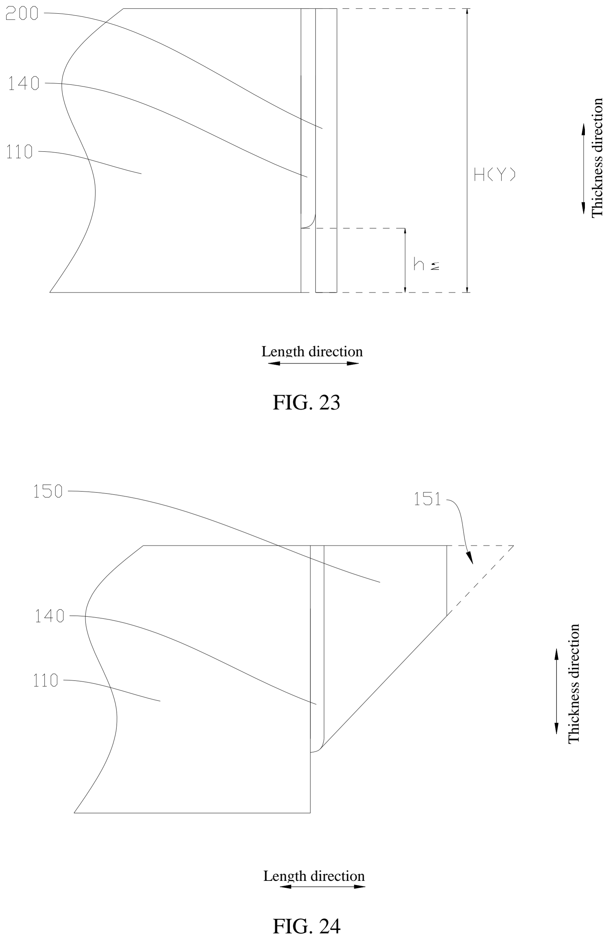

Furthermore, because in this embodiment, the top sealing edge portion 140 is folded against the packaging portion 110, interference between the top sealing edge portion 140 and the PCB 200 in the thickness direction of the pouch battery can be reduced, such that the width of the PCB 200 can be larger. Specifically, it can be understood that, when the top sealing edge portion 140 is in an unfolded state, because the top sealing edge portion 140 protrudes from the first surface 111 of the packaging portion 110, in the thickness direction of the pouch battery, an edge of the PCB 200 abuts against the top sealing edge portion 140, imposing a constraint on the width of the PCB 200. An example in which a thickness of the top sealing edge portion 140 is h₁ is used. As shown in FIG. 22, where FIG. 22 is a side view of a pouch battery and a PCB in FIG. 1, in this case, Y+h₁≤H, that is, Y≤H-h₁, needs to be satisfied. Furthermore, in some embodiments, a junction where the sealing edge portions (a collective term for the side sealing edge portion 120 and the top sealing edge portion 140) of the pouch battery are connected to the packaging portion 110 is spaced apart from a surface of the packaging portion 110 in a thickness direction of the packaging portion 110 by a specific distance. An example in which a distance between the top sealing edge portion 140 and one surface of the packaging portion 110 in the thickness direction of the packaging portion 110 is h₂ is used. In this case, Y+h₁+h₂≤H, that is, Y≤H-h₁-h₂, needs to be satisfied. In this embodiment, however, the top sealing edge portion 140 is folded toward the packaging portion 110. Whether the top sealing edge portion 140 is flush with the surface of the packaging portion 110 in the thickness direction of the packaging portion 110 or is spaced apart from the surface of the packaging portion 110 in the thickness direction of the packaging portion 110 by a specific distance, the edge of the PCB 200 does not abut against the top sealing edge portion 140. As shown in FIG. 23, wherein FIG. 23 is a side view of a pouch battery and a PCB in FIG. 19, in this case, only Y≤H needs to be satisfied. This allows for an increase in the width of the PCB 200, thereby enhancing the current-carrying capacity and strength of the PCB 200.

Referring to FIG. 20 and FIG. 21, FIG. 21 is an enlarged schematic view of a part E in FIG. 20. Based on the foregoing embodiment, one side of the top sealing edge portion 140 close to the inner side sealing edge portion 130 is arranged curved away from the first surface 111 and extends to the fifth surface 135 of the inner side sealing edge portion 130 to form an extension portion 141, the extension portion 141 has a fourth avoidance slot 1411, and a first sidewall extends into the fourth avoidance slot 1411. Specifically, a principle and function of the extension portion 141 having the fourth avoidance slot 1411 are similar to those of the inner side sealing edge portion 130 having the second avoidance slot 132 in the foregoing embodiment. Details are not described herein again.

Furthermore, referring to FIG. 24, FIG. 24 is a schematic diagram showing a structure obtained after a tip portion is cut. In some embodiments, the tip portion 150 is formed at a junction of the top sealing edge portion 140 and the side sealing edge portion 120. An avoidance region 151 is formed by cutting an end of the tip portion 150 away from the packaging portion 110 in the thickness direction of the pouch battery, thereby reducing a space occupied by the tip portion 150 in the length direction of the pouch battery and increasing the energy density of the pouch battery.

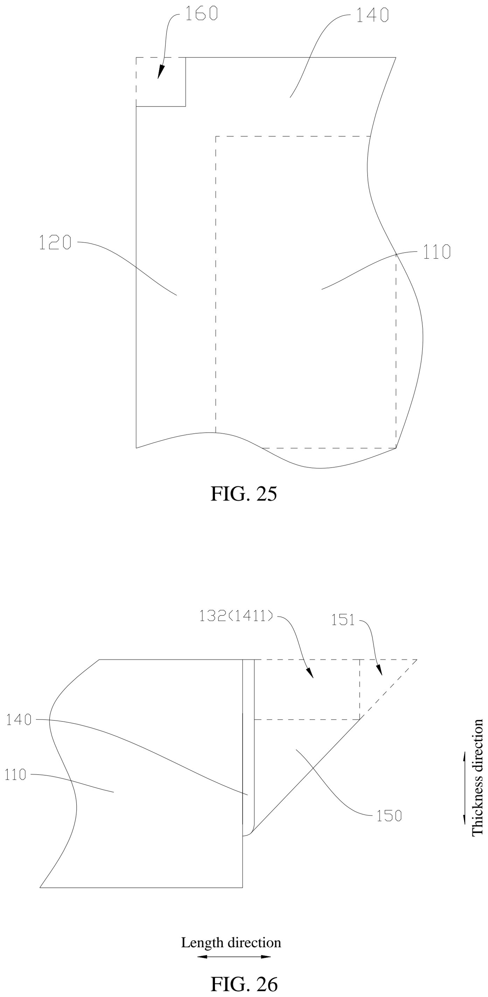

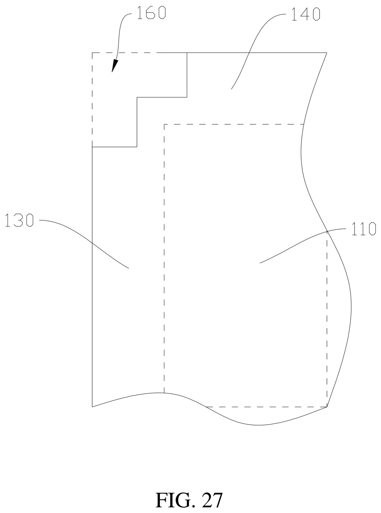

It should be noted that the avoidance region 151 formed by cutting may be formed before the tip portion 150 is formed, that is, when the side sealing edge portion 120 and the top sealing edge portion 140 are in an unfolded state, by cutting a corner where the side sealing edge portion 120 and the top sealing edge portion 140 intersect. For example, a square cut region 160 may be formed by cutting the corner where the side sealing edge portion 120 and the top sealing edge portion 140 intersect, as shown in FIG. 25, wherein FIG. 25 is a schematic diagram showing a top sealing edge portion and a side sealing edge portion in an unfolded state in FIG. 24, and the pouch battery is then folded. Alternatively, the pouch battery may first be folded to form the tip portion 150, and then the tip portion 150 is cut. Furthermore, for the inner side sealing edge portion 130 and the top sealing edge portion 140, because the inner side sealing edge portion 130 and the top sealing edge portion 140 have not only the second avoidance slot 132 and the fourth avoidance slot 1411 but also the avoidance region 151, as shown in FIG. 26, wherein FIG. 26 is a structural schematic diagram of a tip portion formed by an inner side sealing edge portion and a top sealing edge portion, a cut region before the inner side sealing edge portion 130 and the top sealing edge portion 140 are folded is L-shaped, as shown in FIG. 27, wherein FIG. 27 is a schematic diagram showing the inner side sealing edge portion and the top sealing edge portion in an unfolded state in FIG. 26.

The dashed lines in FIG. 24 to FIG. 27 should not be interpreted as representing an actual outline of the pouch battery, and are used solely to clearly illustrate the avoidance region 151, the second avoidance slot 132, the fourth avoidance slot 1411, and the cut region 160.

In some embodiments, the dimension of the first avoidance slot 220 in the thickness direction of the pouch battery 100 ranges from 1.5 mm to 3 mm. Specifically, the first avoidance slot 220 is configured to accommodate the inner side sealing edge portion 130. If the dimension of the first avoidance slot 220 is excessively small, the dimension of the inner side sealing edge portion 130 is excessively small consequently, which is detrimental to sealing of the casing 101. Conversely, if the dimension of the first avoidance slot 220 is excessively large, the width of the PCB 200 at the first avoidance slot 220 is excessively small. For example, in the foregoing embodiment, the width of the first board body 201 is excessively small, resulting in an insufficient current-carrying capacity of the PCB 200. Based on this, in this embodiment, the dimension of the first avoidance slot 220 is set within an appropriate range, ensuring both the sealing integrity of the casing 101 and a high current-carrying capacity of the PCB 200.

According to an embodiment of a second aspect of the present disclosure, an electrical device including the battery pack according to the embodiment of the first aspect is provided. In the battery pack, the PCB 200 is arranged facing the first surface 111 of the packaging portion 110, that is, the thickness direction of the PCB 200 corresponds to the length direction of the pouch battery 100. Furthermore, because the PCB 200 has the first avoidance slot 220, the inner side sealing edge portion 130 can extend into the first avoidance slot 220, thereby avoiding interference between the PCB 200 and the inner side sealing edge portion 130. Therefore, compared with conventional technologies, in this embodiment, the thickness of the PCB corresponds to the length of the pouch battery 100, avoiding the increase in the width of the battery pack due to the width of the PCB. Furthermore, the PCB 200 has the first avoidance slot 220, configured to accommodate the inner side sealing edge portion 130, such that a part of the inner side sealing edge portion 130 does not need to be bent and clamped between the PCB 200 and the packaging portion 110. In this way, there is no need to provide a gap between the PCB 200 and the packaging portion 110 for accommodating the inner side sealing edge portion 130. Therefore, the distance between the PCB 200 and the packaging portion 110 is reduced, and a length of the battery pack is further reduced, the energy density of the battery pack is increased, thereby prolonging service life of the electrical device in this embodiment.

It should be noted that because this embodiment incorporates all the technical features of the battery pack according to the embodiment of the first aspect, this embodiment has all the advantageous effects brought about by the embodiment of the first aspect. Details are not described herein again.

The embodiments of the present disclosure have been described in detail above with reference to the accompanying drawings, but the present disclosure is not limited to the above embodiments, and various changes may be made within the knowledge of those having ordinary skills in the art without departing from the spirit of the present disclosure. In addition, in the description of the specification, the description with reference to the terms "an embodiment," "some embodiments," "exemplary embodiments," "example," "specific example," or "some example" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example. Moreover, the described specific features, structures, materials, or characteristics may be combined in any suitable manner in one or more embodiments.

## Claims

1. A battery pack, comprising:
a plurality of pouch batteries, distributed in a width direction of the pouch battery, wherein each of the pouch batteries comprises a casing and a battery cell, the casing comprises a packaging portion and a side sealing edge portion, the battery cell is located in the packaging portion, each of two opposing sides of the packaging portion in the width direction of the pouch battery is connected to the side sealing edge portion, the side sealing edge portion located between neighboring packaging portions is an inner side sealing edge portion, and one end of the packaging portion in a length direction of the pouch battery has a first surface; and
a printed circuit board (PCB), located at one end of the pouch battery in the length direction of the pouch battery, wherein the inner side sealing edge portion protrudes toward the PCB relative to the first surface, the PCB has two second surfaces opposite to each other in a thickness direction of the PCB, one of the two second surfaces faces the first surface, each of the pouch batteries is electrically connected to the PCB, the PCB has a first avoidance slot, and a part of the inner side sealing edge portion extends into the first avoidance slot.

2. The battery pack of claim 1, wherein the inner side sealing edge portion has a third surface facing the PCB in the thickness direction of the pouch battery, the inner side sealing edge portion has a second avoidance slot, the second avoidance slot is formed through the inner side sealing edge portion in the width direction of the pouch battery and extends to the third surface, and a part of the PCB extends into the second avoidance slot.

3. The battery pack of claim 2, wherein the second avoidance slot forms a slot opening on the third surface, and the slot opening has two opening edges opposite to each other in the length direction of the pouch battery.

4. The battery pack of claim 2, wherein the inner side sealing edge portion has a fourth surface close to the PCB in the length direction of the pouch battery, and the second avoidance slot extends to the fourth surface.

5. The battery pack of claim 4, wherein the inner side sealing edge portion comprises a first folded portion, and the first folded portion is folded away from the PCB to form the second avoidance slot.

6. The battery pack of claim 5, wherein the inner side sealing edge portion has two fifth surfaces opposite to each other in the width direction of the pouch battery, an edge where the fifth surface intersects the third surface is defined as a first edge, an edge where the fifth surface intersects the fourth surface is defined as a second edge, and the first folded portion forms a first fold line on the fifth surface;
one end of the first fold line is located at the first edge, and the other end of the first fold line is located at the second edge; or
one end of the first fold line is located at the first edge, and the other end of the first fold line is arranged spaced apart from the second edge; or
one end of the first fold line is located at the second edge, and the other end of the first fold line is arranged spaced apart from the first edge.

7. The battery pack of claim 6, wherein one end of the first fold line is located at the first edge, the other end of the first fold line is located at the second edge, the first avoidance slot has a first inner wall surface facing the inner side sealing edge portion in the thickness direction of the pouch battery, and the first inner wall surface is arranged inclined toward the first folded portion in a direction from the pouch battery to the PCB.

8. The battery pack of claim 4, wherein the inner side sealing edge portion has two fifth surfaces opposite to each other in the width direction of the pouch battery, the second avoidance slot has a second inner wall surface facing the PCB in the thickness direction of the pouch battery, an edge where the fifth surface intersects the fourth surface is defined as a second edge, and an edge where the fifth surface intersects the second inner wall surface is defined as a third edge; and
the inner side sealing edge portion further comprises a second folded portion, the second folded portion is folded away from the PCB to form a third avoidance slot in communication with the second avoidance slot and form a second fold line on the fifth surface, one end of the second fold line is located at the second edge, and the other end of the second fold line is located at the third edge.

9. The battery pack of claim 8, wherein one end of the second fold line is located at an end of the second edge away from the PCB, and an angle between the second fold line and the length direction of the pouch battery is defined as α, wherein 35°<α≤70°.

10. The battery pack of claim 8, wherein the first avoidance slot has a first inner wall surface facing the inner side sealing edge portion in the thickness direction of the pouch battery, and the first inner wall surface is arranged inclined toward the second folded portion in a direction from the pouch battery to the PCB.

11. The battery pack of claim 10, wherein the PCB comprises a circuit electrically connected to the pouch battery, and the circuit is located on the second surface of the PCB facing away from the pouch battery.

12. The battery pack of claim 2, wherein the casing further comprises a top sealing edge portion connected to the first surface and folded toward the first surface.

13. The battery pack of claim 12, wherein the inner side sealing edge portion has a fourth surface close to the PCB in the length direction of the pouch battery, one side of the top sealing edge portion close to the inner side sealing edge portion is arranged extending away from the first surface and extends to the fourth surface to form an extension portion, the extension portion has a fourth avoidance slot, and the PCB extends into the fourth avoidance slot.

14. The battery pack of claim 1, wherein a dimension of the first avoidance slot in the thickness direction of the pouch battery ranges from 1.5 mm to 3 mm.

15. The battery pack of claim 2, wherein the inner side sealing edge portion is cut to form the second avoidance slot, and a dimension of the second avoidance slot in the thickness direction of the pouch battery ranges from 0.3 mm to 2 mm.

16. An electrical device, comprising the battery pack of any one of claims 1 to 15.
